Europäisches Patentamt

European Patent Office

Office européen des brevets

(19)

(11) Publication number: **0 008 812**
**B1**

(12) EUROPEAN PATENT SPECIFICATION

(45) Date of publication of patent specification: **09.02.83**

(51) Int. Cl.³: **B 62 L  1/12**

(21) Application number: **79200308.9**

(22) Date of filing: **14.06.79**

(54) A bicycle caliper brake assembly.

(30) Priority: **05.07.78 JP  93243/78  U**

(43) Date of publication of application:
**19.03.80 Bulletin 80/6**

(45) Publication of the grant of the patent:
**09.02.83 Bulletin 83/6**

(84) Designated Contracting States:
**DE FR GB IT**

(56) References cited:
**AT - B - 174 825**
**DE - A - 1 959 434**
**DE - U - 7 516 284**
**FR - A - 553 214**
**FR - A - 1 084 288**

(73) Proprietor: **MAEDA INDUSTRIES, LTD.**
**No. 1-16, 2-cho, Minami-koyo-cho**
**Sakai Osaka (JP)**

(72) Inventor: **Yamasaki, Kazuto**
**402, 27-Tou, 1-Banchi, 3-cho Shinkanacka-cho**
**Sakai Osaka (JP)**
Inventor: **Ozaki, Nobuo**
**No. 325, Higashi 3-Cho Hamadera-suwanomori-cho**
**Sakai Osaka (JP)**

(74) Representative: **Frühbuss, Heinrich, Dr.rer.nat.**
**Franz-Fischer-Weg 61**
**D-4300 Essen 13 (DE)**

This invention relates to a bicycle caliper brake assembly characterized in its unique arrangement for connecting one end of a brake control cable to one extremity of a caliper arm.

The prior art as most relevant to the present invention appears to be represented by Austrian Patent Specification No. 174825, in which disclosed is a caliper brake for motor cycles or bicycles of the type that a distance between a pair of spaced brake blocks can be widened by operation of a hand lever. However, the prior art device was not very easy in manipulation of the hand lever and in maintenance of an adjusted distance between the pair of spaced brake blocks.

An object of the invention is to provide an improved caliper brake assembly capable of widening a distance between a pair of spaced brake blocks in a simple way for easily mounting or removing a bicycle wheel.

Another object of the invention is to provide an improved caliper brake assembly capable of maintaining an adjusted distance between a pair of spaced brake blocks without being affected by shocks or oscillations applied thereto.

Other objects and advantages of the invention will become apparent from the detailed description given hereinafter in connection with the accompanying drawings.

In the drawings:

Figure 1 is a front elevation, with parts broken away, showing a preferred embodiment of the caliper brake assembly according to the invention;

Figure 2 is an enlarged, fragmentary perspective view showing the unique arrangement for fixing one end of a brake control cable to one extremity of a caliper arm;

Figure 3 is an exploded view of Figure 2, showing each of the component elements;

Figure 4 is an enlarged section taken along the line A—A of Figure 1;

Figure 5 is a sectional view showing operation, in which the position switch lever is in its uppermost position; and

Figure 6 is a similar view to Figure 5, in which the position switch lever is in its lowermost position.

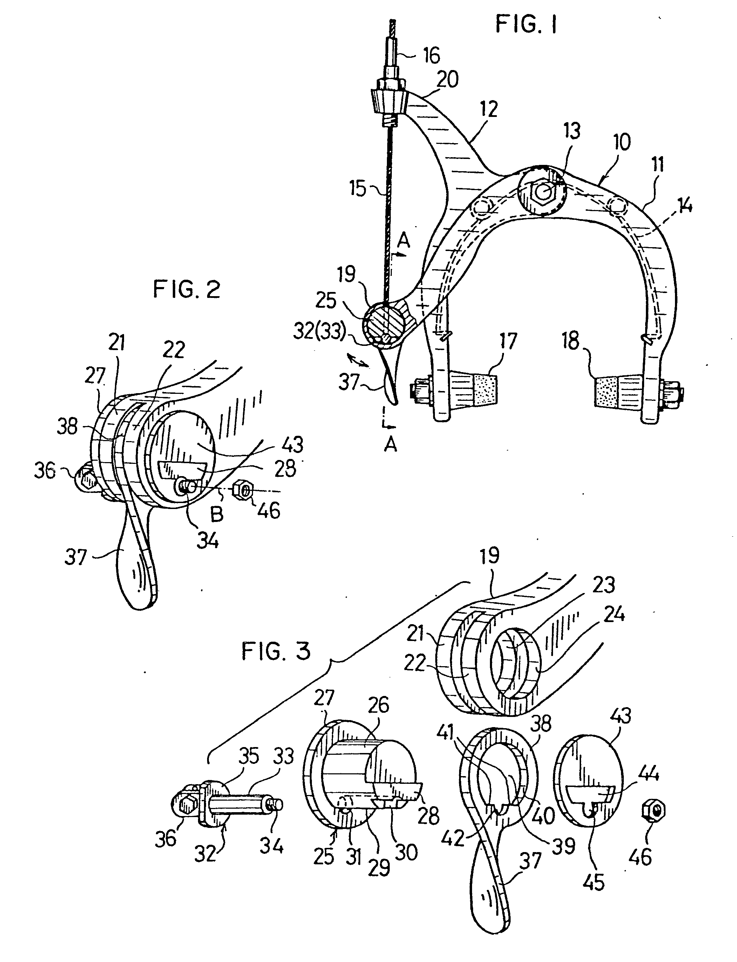

Referring now to the drawings, in particular to Figures 1 to 4, there is illustrated a caliper brake assembly generally referred to by reference numeral 10. As is well known, the assembly 10 is mounted on a suitable portion of a bicycle frame (not shown) in operative relation to a bicycle wheel rim (not shown).

As shown in Figure 1, the assembly 10 has a pair of caliper arms referred to as a front caliper 11 and a rear caliper 12, both of which are pivotally supported by a hinge bolt 13 and always urged by a known torsion spring 14 so as to be expanded outwardly. The calipers 11, 12 are displaceable into their braking position by operation from a remote location by means of a known brake lever (not shown) through a control cable 15 and a flexible tube 16, conventionally.

A pair of known brake blocks 17, 18, preferably made of rubber, are conventionally secured to respective lower ends of the calipers 11, 12, so that they are disposed in opposedly spaced-apart relation with each other with a certain predetermined distance therebetween, said distance being variable within a certain limited range in accordance with operation of the calipers 11, 12.

The brake control cable 15 is connected at one end to a known brake lever (not shown) and at the other end to one extremity 19 of the front caliper 11. The cable 15 passes through internally of the flexible tube 16 which is connected at one end to said brake lever and at the other end to one extremity 20 of the rear caliper 12. Thus, when a cyclist operates the brake lever so as to pull up the cable 15, the extremity 19 is forced to move upward while the other extremity 20 is urged to move downward by the known pressing-down function of the flexible tube 16 that has compressed, so that the distance between the pair of brake blocks 17, 18 is decreased, which results in the blocks coming into braking contact with the sides of a bicycle wheel rim. On the other hand, when the brake lever is released, both of the extremities 19, 20 are resiliently urged to return to their original non-braking position by means of a known torsion spring 14, conventionally.

The construction and operation described hereinabove are known and conventional. The important features of the present invention reside in the following unique and specific arrangement for connecting one end of the brake control cable 15 to the extremity 19 of the front caliper 11.

As best shown in Figure 3, the extremity 19 is provided with a pair of spaced annular supports 21, 22 each having a circular bore respectively designated by reference numerals 23 and 24, within which a rotator 25 is rotatably supported. The rotator comprises a cylindrical body 26 and an annular flange 27. The end surface of the cylindrical body 26 is provided with an integral projection 28. The cylindrical body 26 is partially cut off to provide an axially extending flat surface 29, in which surface is formed an axially extending groove 30 having a semi-circular cross-section. The groove 30 is communicated with a circular hole 31 formed in the flange 27.

A member generally designated by reference numeral 32 is a cable mounter, which includes a cylindrical shaft 33 with a reduced threaded extension 34, an end flange 35, and a known cable clamp 36 secured to said flange 35 for clamping the lower end of the cable 15. The member 32 is coupled with the rotator 25 by inserting the cylindrical shaft 33 into said hole 31 and the groove 30.

A position switch lever 37 has an annular base 38 to be interposed between the pair of spaced annular supports 21, 22. The base 38 is formed with a bore 39 having a configuration corresponding to that of the cross section of the cylindrical body 26. More particularly, the configuration of the bore 39 is defined by a circular internal wall 40 engageable with the cylindrical surface of the body 26, flat internal walls 41 engageable with the flat surface 29 of the body 26, and a concave wall 42 of the same configuration as that of the semi-circular groove 30. Thus, the lever 37 can be fixedly mounted to the body 26 so as to coaxially rotate therewith.

A disc member 43 has an external diameter slightly larger than the internal diameter of the *circular bore 24*. The disc member 38 has a window 44 formed therein, whose configuration corresponds with that of the cross section of the projection 28, so that it can be fitted into the window 44. The disc member 43 has a substantially semi-circular hole 45 aligned with the groove 30 in the common axis B and disposed adjacent to said window 44 in intercommunicating relation with each other. As a result, when assembled, an elongated hollow space extending in the axis B is formed by the circular hole 31, the groove 30, the concave wall 42 and the substantially semi-circular hole 45, so that the cylindrical shaft 33 can extend through said hollow space.

In assembly, after the annular base 38 of the lever 37 is interposed between the pair of spaced annular supports 21, 22, the cylindrical body 26 is inserted into the three aligned bores 23, 39 and 24. Then, the cylindrical shaft 33 of the cable mounter is inserted from the hole 31 of the flange 27 so that it extends through the groove 30 and the concave wall 42, with its threaded extension 34 projecting outwardly. Then, the disc member 43 is disposed in abutment with a side wall of the annular support 22 with the window 44 engaged with the projection 28. Finally, a clamp nut 46 is engaged with the threaded extension 34 exposed out of the hole 45. By tightening the nut 46, the elements 19, 25, 32, and 43 can be tightly assembled together.

After thus assembled, the rotator 25 is rotatably supported within the circular bores 23, 24 of the supports 21, 22. The lever 37 and the disc member 43 are coaxially rotatable together with rotator 25. In other words, by manually turning the lever 37, the rotator 25 is rotated.

In the above-described arrangement, it should be understood that, since the shaft 33 is sandwiched between the internal cylindrical walls of the bores 23, 24 and the semi-circular wall of the groove 30, the shaft 33 is retained in position by considerable friction.

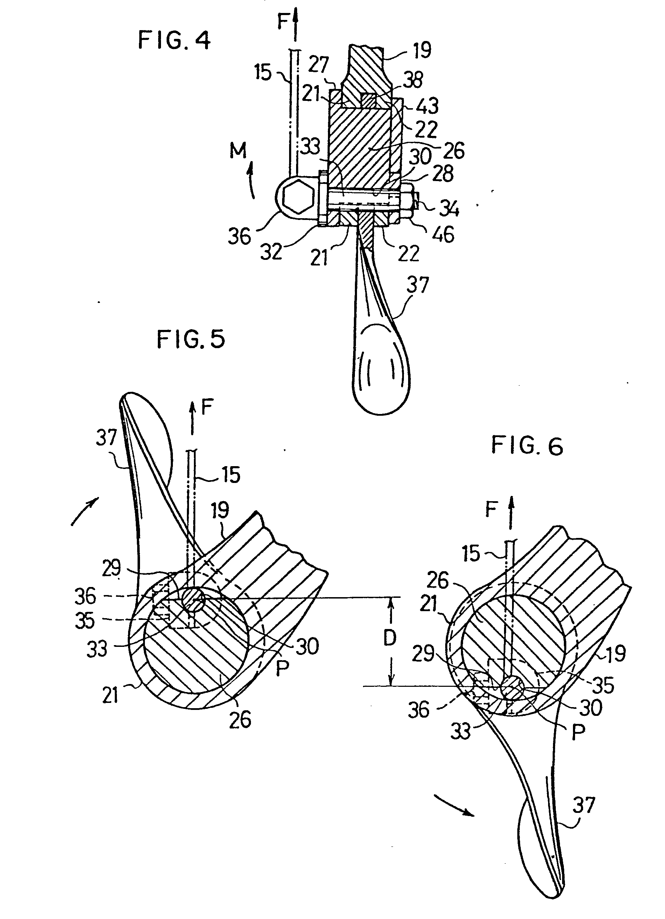

Thus, in operation, when the lever 37 is turned upwardly from its lowermost position of Figure 6 to its uppermost position of Figure 5, the cable fixing point P is shifted upward by a predetermined distance D, so that the cable 15, which extends in tension between said fixing point P and a known brake lever (not shown), is slackened by a certain amount. Consequently, the torsion spring 14, which always urges the calipers 11, 12 to their expanding positions, functions immediately to absorb the slackened amount in the cable 15, so that the front caliper 11 is moved counterclockwise about the hinge bolt 13 thereby to cause the brake block 18 to move away from the wheel rim (not shown). At this stage, the distance between the pair of brake blocks 17, 18 is widened enough to permit the wheel rim (not shown) to pass therebetween, whereby it is possible to mount or remove the bicycle wheel quite easily without being prevented by the brake blocks 17, 18.

On the other hand, when the lever 37 is turned downwardly from its uppermost position of Figure 5 to its lowermost position of Figure 6, the cable fixing point P is shifted downward by the distance D to impart a certain tension to the cable 15, so that the extremity 19 of the front caliper 11 is pulled up thereby to cause the caliper 11 to move clockwise about the bolt 13. As a result, the brake block 18 draws near to the wheel rim.

Usually, the brake assembly 10 should be used with the switch lever 37 in its lowermost position as illustrated in Figure 6. In this position, it should be noted that the cylindrical shaft 33 is always forcibly pulled up at one end by the pulling-up function F of the tensioned cable 15. In other words, a clockwise moment as indicated by an arrow M is applied to said one end of the shaft 33 so that the end portion thereof is pressed against the wall of the groove 30 to develop a strong frictional resistance therebetween, while the opposite end portion is depressed against the internal surfaces 23, 24 of the annular supports also to develop a strong frictional resistance therebetween. As a result, the lever 37 can maintain its lowermost position without being affected by the shocks or oscillations occasionally applied to the brake assembly 10. Thus, the caliper brake assembly according to the present invention can facilitate maintaining a predetermined, constant distance between a pair of brake blocks 17, 18, when in use.

Further, by slightly turning the lever 37 in the clockwise direction, a minute or fine adjustment of the distance between the pair of brake blocks 17, 18 can be obtained.

Further, it will be easily understood from the particular and specific construction of the invention described in detail in the foregoing that, when the clockwise moment indicated by the arrow M is applied to said one end of the shaft 33 by said pulling-up function F of the tensioned cable 15, with the result that one end portion of the shaft 33 is pressed against the semi-circular wall which defines the groove 30 while the other end portion of the shaft 33 is depressed against the internal cylindrical walls 23, 24 of the extremity 19, the cylindrical body 26 of the rotator 25 is slightly pushed away inwardly, and forcibly pressed against the internal cylindrical walls 23, 24, resulting in the rotator 25 being prevented from rotation. As a result, the rotator 25 can remain positioned in any intermediate position between said lowermost position and said uppermost position.

## Claims

1. A bicycle caliper brake assembly comprising: a pair of pivotal calipers (11, 12) always urged by a torsion spring (14) to expand outwardly; a pair of spaced brake blocks (17, 18) secured to respective lower ends of the calipers so as to move slightly toward each other when the calipers are operated from a remote location by means of a brake lever through a control cable (15) connected at one end to one extremity (19) of the caliper (11); said extremity (19) being formed with a pair of spaced annular supports (21, 22) each having a tubular bore (23, 24); a rotator (25) which is rotatably mounted within said bores (23, 24); a position switch lever (37) connected to said rotator (25) for coaxial rotation therewith; and a cable mounter (32) having a cable clamp (36) to which one end of the cable (15) is connected, characterized in that said rotator (25) has a cylindrical body (26) formed with an axially extending groove (30) defined by a semi-circular wall, the cable mounter (32) comprising a cylindrical shaft (33) disposed within said groove (30) and sandwiched between internal cylindrical walls of said bores (23, 24) and the semi-circular wall of the groove (30), said shaft (33) being circumferentially shiftable on said internal cylindrical walls of the bore (23, 24) from its lowermost position to its uppermost position and vice versa by manual operation of the lever 37.

2. The brake assembly according to Claim 1, wherein said position switch lever (37) has an annular base (38) interposed between said pair of spaced annular supports (21, 22).

3. The brake assembly according to Claim 1, wherein the rotator (25) has a cylindrical body (26) part of whose surface is an axially extending flat surface (29) provided with an axially extending groove (30) within which said cylindrical shaft (33) of the cable mounter is partially received.

4. The brake assembly according to Claim 1, wherein a disc member (43) is disposed in abutment with a side wall of the annular support (22), and said cylindrical shaft (33) has a threaded extension (34) projecting out of said disc member for engagement with a clamp nut (46).

5. The brake assembly according to Claim 4, wherein the disc member (43) is provided with a window (44), and one end of the cylindrical shaft (33) is provided with a projection (28) which is in engagement with said window.

## Patentansprüche

1. Eine Fahrradbremse bestehend aus einem Paar drehbarer Klauen (11, 12), die ständig über eine Torsionsfeder (14) auf Abstand gehalten werden, einem Paar Bremsklötze (17, 18), die an den jeweiligen Enden der Klauen befestigt sind und sich ein wenig aufeinander zu bewegen, sobald die Klauen über einen Bremshebel betätigt werden, der über ein Bremskabel (15) wirksam wird, welches mit einem Ende am Ende (19) der Klaue (11) verbunden ist, wobei das besagte Ende (19) als Paar ringförmiger Halterungen (21, 22) mit rohrförmigen Bohrungen (23, 24) ausgebildet ist, einem in den Bohrungen (23, 24) drehbar montiertem Rotor (25), einem Positionshebel (37), der zur Durchführung koaxialer Drehungen mit dem besagten Rotor (25) verbunden ist, und aus einem Kabelhalter (32) mit einer Kabelklemme (36), in der das eine Ende des Kabels (15) befestigt ist, dadurch gekennzeichnet, dass der besagte Rotor (25) ein zylinderförmiges Kernstück (26) mit einer axial verlaufenden, halbkreisförmige Wandungen aufweisenden Aussparung (30) besitzt, der Kabelhalter (32) aus einem zylinderförmigen, in die besagte Aussparung (30) passenden Schaft (33) besteht, der in die inneren zylinderförmigen Wände der besagten Bohrungen (23, 24) und die halbkreisförmige Wand der Aussparung (30) eingebettet ist, wobei der Schaft (33) peripher verschiebbar auf den besagten inneren zylinderförmigen Wänden der Bohrungen (23, 24) ist, und zwar von seiner untersten Position zu seiner obersten Position und umgekehrt durch von Hand-Betätigung des Hebels (37).

2. Fahrradbremse gemäss Anspruch 1, dadurch gekennzeichnet, dass der Positionshebel (37) eine zwischen dem Paar der ringförmigen Halterungen (21, 22) gelagerte ringförmige Basis (38) besitzt.

3. Fahrradbremse gemäss Anspruch 1, dadurch gekennzeichnet, dass der Rotor (25) einen zylinderförmigen Körper (26) besitzt, dessen Oberfläche teilweise eine axial erstreckte flache Oberfläche (29) besitzt, die eine axial verlaufende Aussparung (30) aufweist, von der der besagte zylinderförmige Schaft (33) des Kabelhalters teilweise aufgenommen ist.

4. Fahrradbremse gemäss Anspruch 1, dadurch gekennzeichnet, dass eine Scheibe (43) an der äusseren Wand der ringförmigen Halterung (22) anliegt und der besagte zylinderförmige Schaft (33) aus der besagten Scheibe mit einem Gewindeende (34) zum Aufschrauben einer Festspannmutter (46) herausragt.

5. Fahrradbremse gemäss Anspruch 4, dadurch gekennzeichnet, dass die Scheibe (43)

7 0 008 812 8

einen Durchbruch (44) und ein Ende des zylinderförmigen Schaftes (33) einen Vorsprung (28) besitzen, der dem besagten Durchbruch angepasst ist.

## Revendications

1. Ensemble de frein à étrier pour bicyclette, comprenant une paire d'étriers oscillants (11, 12) constamment sollicités par un ressort de torsion (14) pour s'écarter vers l'extérieur; une paire de patins de frein espacés (17, 18) fixés aux extrémités inférieures respectives des étriers de manière à se rapprocher légèrement l'un de l'autre lorsque les étriers sont actionnés à partir d'une position éloignée au moyen d'un levier de frein, par l'intermédiaire d'un câble de commande (15) relié, à une extrémité, (19) d'un étrier (11); ladite extrémité (19) étant munie de deux supports annulaires espacés (21, 22) ayant chacun un perçage tubulaire (23, 24); un organe tournant (25) qui est monté rotatif dans lesdits perçages (23, 24); un levier de changement de position (27) relié audit organe tournant (25) pour tourner coaxialement avec celui-ci; et une monture de câble (32) ayant un serre-câble (36) auquel une extrémité du câble (15) est reliée, caractérisé en ce que ledit organe tournant (25) comprend un corps cylindrique (26) muni d'une rainure (30) s'étendant axialement, définie par une paroi semi-circulaire, la monture de câble (32) comprenant une tige cylindrique (33) disposée dans ladite rainure (30) et interposée entre les parois cylindriques internes desdits perçages (23, 24) et la paroi semi-circulaire de la rainure (30), ladite tige (33) pouvant être déplacée circonférentiellement sur lesdites parois cylindriques internes des perçages (23, 24), pour passer de sa position extrême inférieure à sa position extrême supérieure et inversement par l'actionnement manuel du levier (37).

2. Ensemble frein suivant la revendication 1, caractérisé en ce que ledit levier (37) de changement de position possède une embase annulaire (38) interposée entre ladite paire de supports annulaires espacés (21, 22).

3. Ensemble frein suivant la revendication 1, caractérisé en ce que l'organe tournant (25) possède un corps cylindrique (26) dont une partie de la surface est une surface plane (29) s'étendant axialement munie d'une rainure (30) s'étendant axialement dans laquelle ladite tige cylindrique (33) de la monture de câble est partiellement reçue.

4. Ensemble frein suivant la revendication 1, caractérisé en ce qu'un élément en forme de disque (43) est disposé en butée contre une paroi latérale du support annulaire (22) et ladite tige cylindrique (33) possède un prolongement fileté (34) qui émerge à l'extérieur dudit élément en forme de disque pour coopérer avec un écrou de serrage (46).

5. Ensemble frein suivant la revendication 4, caractérisé en ce que l'élément en forme de disque (43) est muni d'une fenêtre (44) et une extrémité de la tige cylindrique (33) est munie d'une saillie (28) qui est en prise avec ladite fenêtre.

**0 008 812**

FIG. 1

FIG. 2

FIG. 3

FIG. 4

FIG. 5

FIG. 6